(19) Europäisches Patentamt
European Patent Office
Office européen des brevets

(11) Veröffentlichungsnummer: **0 099 534**
**B1**

(12) # EUROPÄISCHE PATENTSCHRIFT

(45) Veröffentlichungstag der Patentschrift: **05.02.86**

(21) Anmeldenummer: **83106773.1**

(22) Anmeldetag: **11.07.83**

(51) Int. Cl.⁴: **C 07 C 149/26**, C 07 C 149/42, C 07 C 149/43, C 07 C 147/00, A 01 N 35/06, A 01 N 37/42, A 01 N 41/10

(54) **Cyclohexan-1,3-dion-Derivate, Verfahren zu deren Herstellung sowie Herbizide, die diese Verbindungen enthalten.**

(30) Priorität: **22.07.82 DE 3227389**

(43) Veröffentlichungstag der Anmeldung: **01.02.84 Patentblatt 84/5**

(45) Bekanntmachung des Hinweises auf die Patenterteilung: **05.02.86 Patentblatt 86/6**

(84) Benannte Vertragsstaaten: **BE DE FR GB IT NL**

(56) Entgegenhaltungen:
**BE - A - 891 190**
**DE - A - 3 123 018**
**DE - B - 2 822 304**

(73) Patentinhaber: **BASF Aktiengesellschaft, Carl-Bosch-Strasse 38, D-6700 Ludwigshafen (DE)**

(72) Erfinder: **Becker, Rainer, Dr., Im Haseneck 22, D-6702 Bad Duerkheim (DE)**
Erfinder: **Jahn, Dieter, Dr., Burgunder Weg 8, D-6803 Edingen-Neckarhausen (DE)**
Erfinder: **Rohr, Wolfgang, Dr., In der Dreispitz 13, D-6706 Wachenheim (DE)**
Erfinder: **Wuerzer, Bruno, Dr. Dipl.-Landwirt., Ruedigerstrasse 13, D-6701 Otterstadt (DE)**

**EP 0 099 534 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Es ist bekannt, daß z.B. 2-(1-Ethoxyaminobutyliden)-5-(2-ethylthiopropyl)-cyclohexan-1,3-dion und andere Verbindungen dieses Typs mit einer Niederalkyl- oder Phenylgruppe am Schwefelatom eine gute Wirkung gegen Gräser haben (DE-A-2 822 304, BE-PS 891 190, DE-A-3 123 018)..

Es wurde nun gefunden, daß Cyclohexan-1,3-dion-Derivate der Formel I

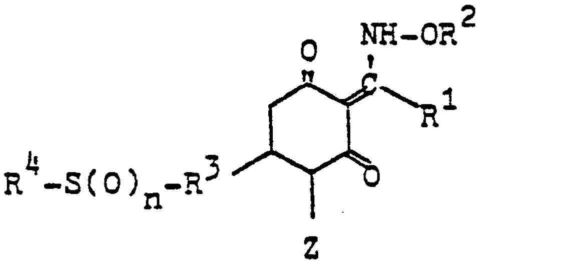

I

und Salze dieser Verbindungen, wobei jeweils bedeuten:

$R^1$ Alkyl mit 2 bis 4 Kohlenstoffatomen;

$R^2$ Alkyl, Alkenyl oder Alkinyl mit 2 bis 5 Kohlenstoffatomen, wobei das Alkenyl halogensubstituiert sein kann;

$R^3$ gesättigte oder ungesättigte Alkylenkette mit 1 bis 4 Kohlenstoffatomen, gegebenenfalls substituiert mit 1 bis 3 Alkyl- oder Alkenylresten mit insgesamt 1 bis 8 Kohlenstoffatomen, mit einem Arylrest mit 6 bis 10 Kohlenstoffatomen oder einem Benzylrest;

$R^4$ Alkyl mit 1 bis 6 C-Atomen, falls $R^3$ ungesättigt ist oder olefinisch oder aromatisch substituiert ist; Alkenyl, gegebenenfalls halogensubstituiert, oder Alkinyl, jeweils mit 2 bis 6 Kohlenstoffatomen; Naphtyl, Arylakyl oder Arylalkenyl mit jeweils 6 bis 10 Kohlenstoffatomen im Arylrest, der durch Alkyl oder Alkoxy mit jeweils 1 bis 3 Kohlenstoffatomen oder durch Halogen substituiert sein kann, und 2 bis 3 Kohlenstoffatomen im Alkyl-bzw. Alkenylrest, von denen mindestens zwei zwischen dem Arylrest und dem Schwefel stehen;

Z H oder Methoxycarbonyl;

n 0, 1, 2

ebenfalls gegen Gräser herbizid wirksam sind und dabei nicht nur breitblättrige Kulturpflanzen und monokotyle Kulturen, welche nicht zur Familie der Gräser (Gramineen) zählen, sondern überraschenderweise auch Getreide nicht oder nur wenig schädigen.

Die neuen Verbindungen der Formel I können in verschiedenen tautomeren Formen vorliegen, die alle vom Patentanspruch umfaßt werden:

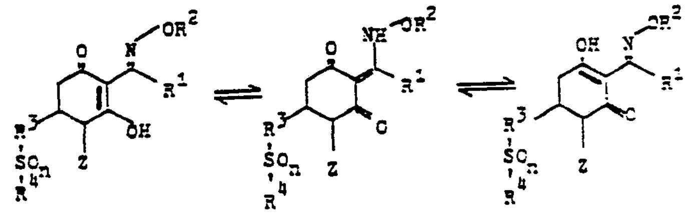

$R^1$ in der Formel I steht für verzweigte oder unverzweigte Alkylreste, wie Ethyl, n-Propyl, i-Propyl, n-Butyl;

$R^2$ in der Formel I steht für beispielsweise Ethyl, Allyl, Propargyl, n-Propyl, i-Propyl, n-Butyl, i-Butyl, tert.-Butyl, 3-Chlorprop-2-enyl, 2-Chlorprop-2-enyl, 2,3,3-Trichlor-prop-2-enyl, 2,3-Dibromprop-2-enyl, Pentyl;

$R^3$ in der Formel I steht beispielsweise für Methylen, Ethylen, Methylmethylen, Methylethylen, Ethylethylen, n-Propylethylen, i-Propylethylen, n-Butylethylen, Phenylethylen, Methylhexenylethylen;

$R^4$ in der Formel I bedeutet beispielsweise Allyl, 3-Chlorprop-2-enyl, 2-Chlorprop-2-enyl, Propargyl, 1-Methylprop-1-enyl, But-2: enyl,α-Naphthyl, β-Naphthyl, Phenylethyl, Phenylpropyl

Als Salze der Verbindungen der Formel I kommen beispielsweise die Alkalisalze, insbesondere Kalium- oder Natriumsalze, Erdalkalimetallsalze, insbesondere Calcium-, Magnesium- oder Bariumsalze, ferner Mangan-, Kupfer-, Zinkoder Eisensalze in Betracht.

Das Anion $A^{\ominus}$ des im Anspruch 2 erwähnten Hydroxylammoniumsalzes ist ein einwertiges Anion oder ein Äquivalent eines mehrwertigen Anions, beispielsweise $Cl^-$, $Br^-$, 1/2 $SO_4^{2-}$, $H_3C-COO^-$

**Herstellung**

Die Herstellung der neuen Derivate I kann auf den nachfolgend beschriebenen Wegen erfolgen:

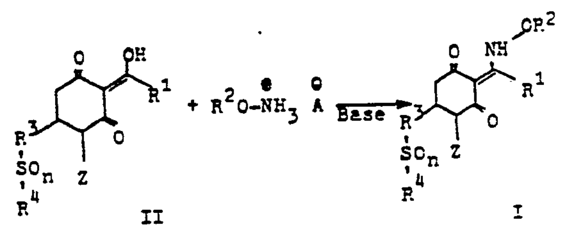


II I

wobei $R^1$ bis $R^4$, Z und A die oben genannten Bedeutungen haben.

Man führt die Reaktion zweckmäßig in heterogener Phase in einem Temperaturbereich zwischen 0 und 80°C in einem inerten Lösungsmittel in Gegenwart einer Base durch.

Geeignete Basen sind beispielsweise Carbonate, Hydrogencarbonate, Acetate, Alkoholate, Hydroxide oder Oxide von Alkali- oder Erdalkalimetallen, insbesondere von Natrium, Kalium, Magnesium, Calcium. Ebenso können auch organische Basen, wie Pyridin oder tert.-Amine, verwendet werden. Ein für die Umsetzung besonders geeigneter definierter pH-Bereich reicht von pH 2 bis 8, insbesondere von 4,5 bis 5,5. Die Einstellung dieses pH-Bereiches erfolgt vorteilhaft durch Zusatz von Acetaten, wie beispielsweise Natriumoder Kaliumacetat, oder von Hydrogencarbonaten, wie Natrium- oder Kaliumhydrogencarbonat. Die Basen werden in Mengen von 0,5 bis 2 Mol, bezogen auf die Hydroxylammoniumverbindung, eingesetzt. Als Lösungsmittel sind beispielsweise geeignet Dimethylsulfoxid, Alkohole, wie Methanol, Ethanol, iso-Propanol, Benzol oder Toluol, gegebenenfalls chlorierte Kohlenwasserstoffe, wie Methylenchlorid, Chloroform, Dichlorethan, Ester wie Essigsäureethylester oder Ether, wie Dioxan, Tetrahydrofuran oder Diethylether. Die Reaktion ist nach wenigen Stunden beendet, das Reaktionsprodukt kann gewonnen werden durch Einengen der Reaktionsmischung, Zugabe von Wasser und Extraktion mit einem unpolaren Lösungsmittel wie Methylenchlorid, sowie Abdestillieren des Lösungsmittels unter vermindertem Druck.

Darüberhinaus können die Verbindungen der Formel I auch durch Umsetzung der Verbindungen II mit Hydroxylaminen der Formel $R^2ONH_2$ bzw. deren wäßrigen Lösungen in inerten Lösungsmitteln unter den oben beschriebenen Bedingungen erhalten werden.

Weiterhin ist die Herstellung der neuen Verbindungen auch möglich durch Umsetzung der Verbindungen der Formel II mit Hydroxylamin zu den Oximen und Alkylierung dieser Oxime mit geeigneten Alkylierungsagentien zu den erfindungsgemäßen Endprodukten:

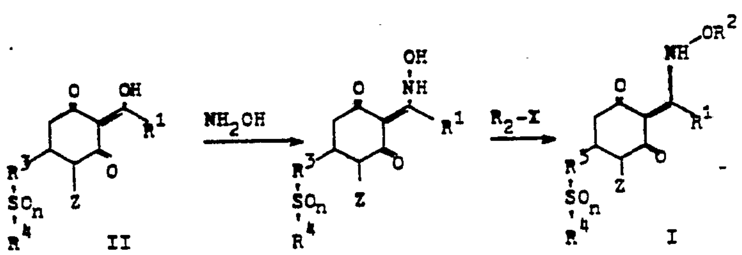


II I

Die Verbindungen der Formel II können durch C-Acylierung der Cyclohexadione-1,3 (III), wie dies in Tetrahedron Letters (1975), S. 2491 beschrieben ist, erhalten werden. Des weiteren ist eine C-Acylierung der Cyclohexandione-1,3 (III) mit anschließender Umlagerung unter saurer Katalyse ($AlCl_3$, nach Synthesis (1978) S. 925) oder basischer Katalyse (Pyridinderivate, nach dem jap. Patent 54083052) zur Herstellung der Derivate II geeignet.

Die Verbindungen III können ebenfalls in folgender tautomeren Form III a/b vorliegen:

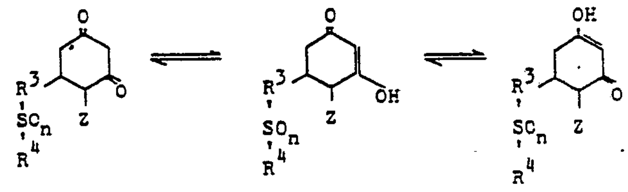

III IIIa IIIb

Verbindungen der Formel III sind aus Aldehyden $R^4$-$SO_n$-$R^3$-CH=O nach literaturbekannten Methoden beispielsweise durch Aldolkondensation mit Aceton und anschließender Cyclisiarung mit Malonsäureester analog Organic Synthesis Coll. Vol. II, Seite 200, darzustellen. Auch durch Umsetzung des Aldehyds $R^4SO_nR^3$-CHO mit Malonsäure nach Knoevenagel-Doebner (siehe Org. Reaction Bd. 15, Seite 204), Veresterung der erhaltenen Säure sowie Cyclisierung mit Acetessigester, in analoger Weise, wie dias z.B. in Chem. Ber. 96 (1983), Seite 2948 beschrieben wird, gelangt man zu den Zwischenproduktan der Formel III.

Die Aldehyde $R^4$-$SO_n$-$R^3$CHO sind durch Addition der Mercaptane an ungesättigte Aldehyde zugänglich (Deutsches Patant Nr. 855 704). Eine weitere Möglichkeit zur Synthese der Verbindungen III besteht in der Umsetzung von ξ-Halogencrotonsäurederivaten mit Mercaptanen und Cyclisierung der erhaltenen ξ-Mercaptocrotonsäurederivate mit Acetessigester wie oben beschrieben.

Die Natrium- und Kaliumsalza der neuen Verbindungen können durch Behandeln dieser Verbindungen mit Natrium- oder Kaliumhydroxid in wäßriger Lösung oder in einem organischen Lösungsmittel wie Methanol, Ethanol, Aceton erhaltan werden. Es können auch Alkalialkoholate als Basen eingesetzt werden.

Andere Metallsalze, z.B. die Mangan-, Kupfer-, Zink-, Eisen- oder Bariumsalze können aus dem Natriumsalz durch Reaktion mit dem entsprechenden Metallchlorid in wäßriger Lösung hergestellt werden.

Die folgenden Beispiele erläutern die Herstellung der neuen Cyclohexandione. Teile beziehen sich auf das Gewicht. Gewichtsteile verhalten sich zu Volumenteilen wie kg zu Liter.

**Beispiel 1**

10,6 Gew.-Teile 2-Butyryl-4-methoxycarbonyl-5-(2-allylthio -propyl)-cyclohexan-1,3-diol werden in 150 Volumenteilen Ethanol gelöst und mit 3,3 Gew.-Teilen Allyloxiammoniumchlorid sowie 2,9 Gew.-Teilen Natriumacetat versetzt.

Nach 20stündigem Rühren bei Raumtemperatur

wird in Eiswasser gegeben und mit Methylenchlorid extrahiert. Nach Abziehen des Methylenchlorids verbleiben 11,3 g 2-(1-Allyloxibutyliden)-4-methoxycarbonyl-5-(2-allylthiopropyl)cyclohexandion-1,3 als gelbes Öl.

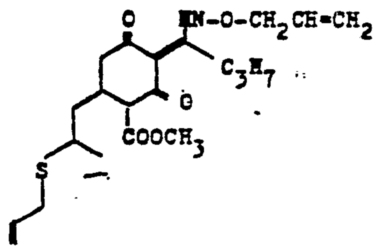

$C_{21}H_{31}NO_5S$ M = 409 $n_D^{25}$ 1,5337

ber: C 81,5 H 7,8 N 3,4 S 7,8
gef: C 81,7 H 7,7 N 3,1 S 8,2

Die nachstehend aufgeführten Verbindungen lassen sich in analoger Weise herstellen:

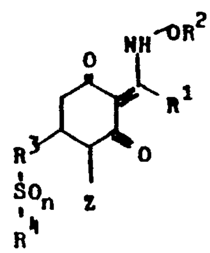

| Verbindung Nr. | $R^1$ | $R^2$ | $\succ R^3$-S- | $R^4$ | Z | n | Brechungsindex (Temp.) |
|---|---|---|---|---|---|---|---|
| 1 | n-$C_3H_7$ | $-CH_2CH=CH_2$ | $\succ$-$CH_2CH(CH_3)$-S- | $-CH_2CH=CH_2$ | $-COOCH_3$ | 0 | 1,5337 (25°) |
| 2 | " | $-C_2H_5$ | " | " | " | 0 | 1,5325 (25°) |
| 3 | " | $-C_2H_5$ | " | " | H | 0 | 1,5397 (25°) |
| 4 | " | $-CH_2CH=CH_2$ | " | " | H | 0 | 1,5408 (25°) |
| 5 | " | $-CH_2CH=CHCl$ | " | " | H | 0 | |
| 6 | " | $-CH_2CCl=CH_2$ | " | " | H | 0 | |
| 7 | " | $-C_2H_5$ | " | " | H | 1 | |
| 8 | " | $-C_2H_5$ | " | " | H | 2 | |
| 9 | " | $-C_2H_5$ | " | $-CH_2CH_2C_6H_5$ | $-COOCH_3$ | 0 | |
| 10 | " | $-CH_2CH=CH_2$ | " | " | $-COOCH_3$ | 0 | 1,5556 (25°) |
| 11 | " | $-C_2H_5$ | " | " | H | 0 | |

| Verbindung Nr. | $R^1$ | $R^2$ | $R^3$ | $R^4$ | Z | n | Brechungsindex (Temp.) |
|---|---|---|---|---|---|---|---|
| 12 | $n-C_3H_7$ | $-CH_2CH=CH_2$ | $-CH_2CH(CH_3)-$ | $-CH_2CH_2C_6H_5$ | H | 0 | |
| 13 | " | $-CH_2CH=CHCl$ | " | " | H | 0 | |
| 14 | " | $-CH_2CCl=CH_2$ | " | " | H | 0 | |
| 15 | " | $-C_2H_5$ | " | " | H | 1 | |
| 16 | " | $-C_2H_5$ | " | " | H | 2 | |
| 17 | " | $-C_2H_5$ | $-CH_2CH(C_6H_5)-$ | $-C_2H_5$ | H | 0 | 1,5628 (31°C) |
| 18 | " | $-CH_2CH=CH_2$ | " | " | H | 0 | 1,5662 (31°C) |
| 19 | " | $-C_2H_5$ | $-CH_2C(CH_3)CH_2CH_2CH=C(CH_3)_2$ | " | H | 0 | 1,5192 (31°C) |
| 20 | " | $-CH_2CH=CH_2$ | " | " | H | 0 | |
| 21 | " | $-C_2H_5$ | " | $-C_6H_5$ | H | 0 | |
| 22 | " | $-CH_2CH=CH_2$ | " | $-C_6H_5$ | H | 0 | |
| 23 | " | $-C_2H_5$ | " | $p-Cl-C_6H_5$ | H | 0 | |
| 24 | " | $-CH_2CH=CH_2$ | " | $p-Cl-C_6H_5$ | H | 0 | |
| 25 | " | $-CH_2CH=CHCl$ | " | $-C_2H_5$ | H | 0 | |
| 26 | " | $-CH_2CCl=CH_2$ | " | $-C_2H_5$ | H | 0 | |
| 27 | " | $-C_2H_5$ | $-CH=CH-CH_2-$ | $-C_2H_5$ | H | 0 | |
| 28 | " | $-CH_2CH=CH_2$ | $-CH=CH-CH_2-$ | $-C_2H_5$ | H | 0 | |
| 29 | " | $-C_2H_5$ | $-CH_2-CH=CH-$ | $-C_2H_5$ | H | 0 | |
| 30 | " | $-CH_2-CH=CH_2$ | $-CH_2-CH=CH-$ | $-C_2H_5$ | H | 0 | |
| 31 | $C_2H_5$ | $-C_2H_5$ | $-CH_2CH(CH_3)-$ | $-CH_2CH_2C_6H_5$ | H | 0 | |
| 32 | $C_2H_5$ | $-CH_2CH=CH_2$ | $-CH_2CH(CH_3)-$ | $-CH_2CH_2C_6H_5$ | H | 0 | |
| 33 | $C_2H_5$ | $-CH_2CH=CHCl$ | $-CH_2CH(CH_3)-$ | $-CH_2CH_2C_6H_5$ | H | 0 | |
| 34 | $C_2H_5$ | $-CH_2CCl=CH_2$ | $-CH_2CH(CH_3)-$ | $-CH_2CH_2C_6H_5$ | H | 0 | |
| 35 | $n-C_3H_7$ | $-C_2H_5$ | $-CH_2-CH(CH_2C_6H_5)$ | $-C_2H_5$ | H | 0 | |
| 36 | " | " | $-CH_2-CH(CH_3)-$ | β-Naphthyl | H | 0 | 1,5921 (37°C) |

**Anwendung**

Die Applikation der Mittel kann im Vorauflaufverfahren und bei Nachauflaufanwendung erfolgen. Vorzugsweise werden die neuen Wirkstoffe nach dem Auflaufen der unerwünschten Pflanzen ausgebracht. Sind die Wirkstoffe für gewisse Kulturpflanzen weniger verträglich, so können auch Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blättar darunter wachsender unerwünschter Pflanzen oder die unbedeckte Bodenfläche gelangen (post-directed, lay-by).

Die Aufwandmengen an Wirkstoff betragan je nach Bekämpfungsziel, Jahreszeit, Zialpflanzen und Wachstumsstadien derselben 0,05 bis 5,0 kg Wirkstoff/ha.

Der Einfluß von Vertretern der neuen Cyclohexan-1,3-diol-Derivate auf das Wachstum von erwünschten und unerwünschten Pflanzen wird anhand von Gewächshausversuchen aufgezeigt:

Als Kulturgefäße dienten Plastikblumentöpfe mit 300 $cm^3$ Inhalt und lehmigem Sand mit etwa 1,5 % Humus als Substrat. Die Samen der Testpflanzen wurden nach Arten getrennt flach eingesät. Unmittelbar danach erfolgte bei Vorauflaufbehandlung das Aufbringen der Wirkstoffe auf die Erdoberfläche. Sie wurden hierzu in Wasser als Verteilungsmittel suspendiert oder emulgiert und mittels fein verteilender Düsen gespritzt. Die Aufwandmengen betrugen 3,0 kg Wirkstoff/ha. Nach dem Aufbringen der Mittel beregnete man die Gefäße leicht, um Wachstum und Keimung in Gang zu bringen. Danach deckte man die Gefäße mit durchsichtigen Plastikhauben ab, bis die Pflanzen angewachsen waren. Diese Abdeckung bewirkte ein gleichmäßiges Keimen der Testpflanzen, sofern dieses nicht durch die Wirkstoffe beeinträchtigt wurde.

Für die Nachauflaufbehandlung zog man die Testpflanzen je nach Wuchsform erst bis zu einer Wuchshöhe von 3 bis 15 cm an und behandelte sie danach. Die für die Nachauflaufanwendung eingesetzte Soja zog man in einem mit Torfmull (peat) angereicherten Substrat an, um ein günstigeres Wachstum zu gewährleisten. Zur Nachauflaufbehandlung wurden direkt gesäte und in den Versuchsgefäßen aufgewachsene Pflanzen ausgewählt. Die Aufwandmengen für die Nachauflaufbehandlung variiarten je nach Wirkstoff. Sie betrugen 0,125, 0,25 sowie auch 3,0 kg Wirkstoff/ha. Eine Abdeckung unterblieb bei der Nachauflaufbehandlung.

Als Vergleichsmittel wurde

A 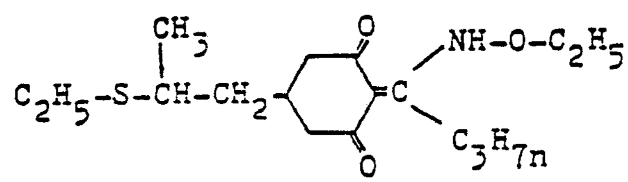

(DE-OS 2 822 304)

mit 0,25 kg/ha eingesetzt.

In die Versuche waren folgende Testpflanzen einbezogen:

| Botanischer Name | Deutscher Name | Englischer Name |
|---|---|---|
| Alopecurus myosuroides | Acker-Fuchsschwanz | blackgrass |
| Avena fatua | Flughafer | wild oats |
| Echinochloa crus-galli | Hühnerhirse | barnyardgrass |
| Glycine max. | Soja | soybeans |
| Lolium multiflorum | Ital. Raygras | ital.ryegrass |
| Hordeum vulgare | Gerste | barley |
| Triticum aestivum | Weizen | wheat |
| Oryza sativa | Reis | rice |

Die Versuchsgefäße wurden im Gewächshaus aufgestellt, wobei für wärmeliebende Arten wärmere Bereiche (20 bis 35°C) und für solche gemäßigter Klimate 10 bis 20°C bevorzugt wurden. Die Vergleichsperiode erstreckta sich über 2 bis 4 Wochen. Während dieser Zeit wurden die Pflanzen gepflegt und ihre Reaktion auf die einzelnen Behandlungen ausgewertet. Bewertet wurde nach einer Skala von 0 bis 100. Dabei bedeutet 0 keine Schädigung oder normaler Aufgang und 100 kein Aufgang bzw. völlige Zerstörung zumindest der oberirdischen Sproßteile.

Bei Vor- und Nachauflaufanwendung im Gewächshaus zeigten die Verbindungen Nr. 3, 4, 11 und 12 eine beachtliche herbizide Wirkung gagen Grasarten.

Bei dar Prüfung im Gewächshaus auf selektive herbizide Wirksamkeit bekämpft die Verbindung Nr. 19 unerwünschte Grasarten mit 0,25 kg Wirkstoff/ha. Schäden an Sojapflanzen sowie den Beispielsgetreidearten Gersta und Weizen traten nicht auf. Das bekannte Vergleichsmittel A ist zwar herbizid etwas stärker, aber auch niadere noch wirksame Dosierungen erreichen nicht die Verträglichkait der erfindungsgemäßen Verbindung Nr. 19.

Bei Nachauflaufanwendung im Oewächshaus bringt Verbindung Nr. 17 mit 0,125 kg Wirkstoff/ha eine beachtliche Bekämpfung unerwünschter Oräser, ohne Kulturpflanzan wie Soja und Weizen zu schädigen. So beträgt die Schädigung bei Glycine max. und Triticum aestivum je 0 %, bei Alopecurus myosuroides 80 % und bei Avena fatua sowie Lolium multiflorum je 90 %.

Ferner bekämpft Verbindung Nr. 11 bei Nachauflaufanwendung von 0,06 kg Wirkstoff/ha in selektiver Weise unarwünschtes Gras (88 % Schädigung bei Echinochloa crus-galli) in Reis (Oryza sativa, 5 % Schädigung).

Ebenso liefert Wirkstoff Nr. 18 mit 0,125 kg Wirkstoff/ha im Gewächshaus eine recht gute Bekämpfung von Flughafer (Avena fatua, 95 % Schädigung) mit nur geringer Schädigung des eingesetzten Weizens (Triticum aestivum, 10 % Schädigung).

In Anbetracht der guten Verträglichkeit für zahlreiche breitblättrige und andere Kulturen und der Vielseitigkeit der Applikationsmethoden können die erfindungsgemäßen Herbizide oder diese enthaltende Mittel noch in einer weiteren großen Zahl von Kulturpflanzen zur Beseitigung unerwünschten Pflanzenwuchses eingesetzt werden.

In Betracht kommen beispielsweise folgende Kulturen:

| Botanischer Name | Deutscher Name | Englischer Name |
|---|---|---|
| Allium cepa | Küchenzwiebel | onions |
| Ananas comosus | Ananas | pineapple |
| Arachis hypogaea | Erdnuß | peanuts (groundnuts) |
| Asparagus officinalis | Spargel | asparagus |
| Beta vulgaris spp. altissima | Zuckerrübe | sugarbeets |
| Beta vulgaris spp. rapa | Futterrübe | fooder beets |
| Beta vulgaris spp. esculenta | Rote Rübe | table beets, red beets |
| Brassica napus var. napus | Raps | rape seed |
| Brassica napus var. napobrassica | Kohlrübe | |
| Brassica napus var. rapa | Weiße Rübe | turnips |
| Brassica rapa var. silvestris | Rübsen | |
| Camellia sinensis | Teestrauch | tea plants |
| Carthamus tinctorius | Saflor - Färberdistel | safflower |
| /a Caryo illinoinensis | Pekannußbaum | pecan trees |
| Citrus limon | Zitrone | lemon |
| Citrus maxima | Pampelmuse | grapefruits |
| Citrus reticulata | Mandarine | |
| Citrus sinensis | Apfelsine, Orange | orange trees |
| Coffea arabica (Coffea canephora, Coffea liberica) | Kaffee | coffee plants |
| Cucumis melo | Melone | melons |

| Botanischer Name | Deutscher Name | Englischer Name |
|---|---|---|
| Cucumis sativus | Gurke | cucumber |
| Cynodon dactylon | Bermudagras | Bermudagrass in turfs and lawn |
| Daucus carota | Möhre | carrots |
| Elaeis guineensis | Ölpalme | oil palms |
| Fragaria vesca | Erdbeere | strawberries |
| Glycine max | Sojabohne | soybeans |
| Gossypium hirsutum (Gossypium arboreum Gossypium herbaceum Gossypium vitifolium) | Baumwolle | cotton |
| Helianthus annuus | Sonnenblume | sunflowers |
| Helianthus tuberosus | Topinambur | |
| Hevea brasiliensis | Parakautschukbaum | rubber plants |
| Hordeum vulgare | Gerste | barley |
| Humulus lupulus | Hopfen | hop |
| Ipomoea batatas | Süßkartoffeln | sweet potato |
| Juglans regia | Walnußbaum | walnut trees |
| Lactua sativa | Kopfsalat | lettuce |
| Lens culinaris | Linse | lentils |
| Linum usitatissimum | Faserlein | flax |
| Lycopersicon lycopersicum | Tomate | tomato |
| Malus spp. | Apfel | apple trees |

| Botanischer Name | Deutscher Name | Englischer Name |
|---|---|---|
| Manihot esculenta | Maniok | cassava |
| Medicago sativa | Luzerne | alfalfa (lucerne) |
| Metha piperita | Pfefferminze | peppermint |
| Musa spp. | Obst- und Mehlbanane | banana plants |
| Nicotiana tabacum (N. rustica) | Tabak | tabacco |
| Olea europaea | Ölbaum | olive trees |
| Oryza sativa | Reis | rice |
| Phaseolus lunatus | Mondbohne | limabeans |
| Phaseolus mungo | Erdbohne | mungbeans |
| Phaseolus vulgaris | Buschbohnen | snapbeans, green beans, dry beans |
| Petroselinum crispum spp. tuberosum | Wurzelpetersilie | parsley |
| Picea abies | Rotfichte | Norway spruce |
| Abies alba | Weißtanne | fire |
| Pinus spp. | Kiefer | pine trees |
| Pisum sativum | Gartenerbse | English peas |
| Prunus avium | Süßkirsche | cherry trees |
| Prunus domestica | Pflaume | plum trees |

| Botanischer Name | Deutscher Name | Englischer Name |
|---|---|---|
| Prunus dulcis | Mandelbaum | almond trees |
| Prunus persica | Pfirsich | peach trees |
| Pyrus communis | Birne | pear trees |
| Ribes sylvestre | Rote Johannisbeere | red currants |
| Ribes uva-crispa | Stachelbeere | |
| Ricinus communis | Rizinus | |
| Saccharum officinarum | Zuckerrohr | sugar cane |
| Sasamum indicum | Sesam | Sesame |
| Solanum tuberosum | Kartoffel | Irish potatoes |
| Spinacia oleracea | Spinat | spinach |
| Theobroma cacao | Kakaobaum | cacao plants |
| Trifolium pratense | Rotklee | red clover |
| Triticum aestivum | Weizen | wheat |
| Vaccinium corymbosum | Kulturheidelbeere | blueberry |
| Vaccinium vitis-idaea | Preißelbeere | cranberry |
| Vicia faba | Pferdebohnen | tick beans |
| Vigna sinensis (V. unguiculata) | Kuhbohne | cow peas |
| Vitis vinifera | Weinrebe | grapes |

Zur Verbreiterung des Wirkungsspektrums und zur Erzielung auch synergistischer Effekte können die neuen Cyclohexan-1,3-dion-Derivate mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, 2,8-Dinitroaniline, N-Phenylcarbamate, Thiolcarbamate, Halogencarbonsäuren, Triazine, Amide, Harnstoffe, Diphenylether, Triazinone, Uracile, Benzofuranderivate und andere in Betracht.

Außerdem ist es nützlich, die neuen Verbindungen allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

**Tabelle 1:** Herbizide Aktivität erfindungsgemäßer Beispielsverbindungen bei Vor- und Nachauflaufanwendung von 3,0 kg Wirkstoff/ha im Gewächshaus

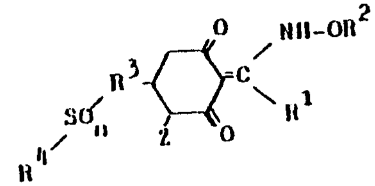

| Wirk-stoff Nr. | $R^1$ | $R^2$ | 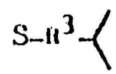 | n | $R^4$ | Z | Testpflanzen und Schädigung % Vorauflauf Echinochloa crus-galli | Nachauflauf Lolium multi-florum | Nachauflauf Echino. c.g. | Nachauflauf Lolium multifl. |
|---|---|---|---|---|---|---|---|---|---|---|
| 11 | $n-C_3H_7$ | $-C_2H_5$ | 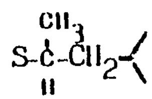 | 0 | $C_6H_5-CH_2-CH_2-$ | H | 100 | 100 | 100 | 90 |
| 12 | $n-C_3H_7$ | $-CH_2CH=CH_2$ | " | 0 | " | H | 100 | 100 | 100 | 90 |
| 3 | $n-C_3H_7$ | $-C_2H_5$ | " | 0 | $CH_2=CH-CH_2-$ | H | 100 | 100 | 100 | 100 |
| 4 | $n-C_3H_7$ | $-CH_2CH=CH_2$ | " | 0 | " | H | 100 | 100 | 100 | 100 |

**Tabelle 2:** Selektive herbizide Wirkung von Verbindung Nr. 19 sowie Vergleichsmittel A bei Nachauflaufanwendung im Gewächshaus

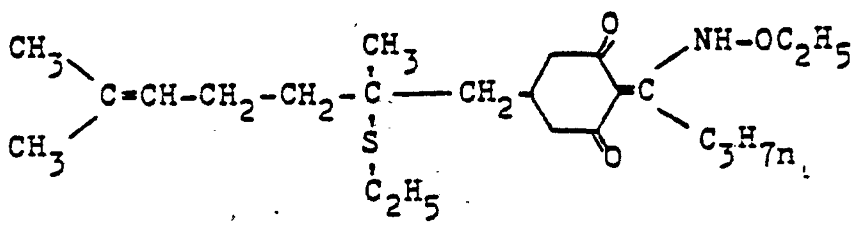

| Testpflanzen | Schädigung % bei 0,25 kg/ha | |
|---|---|---|
| | Nr. 19 | A (bekannt) |
| Glycine max. | 0 | 0 |
| Hordeum vulgare | 0 | 90 |
| Triticum aestivum | 0 | 90 |
| Alopecurus myosuroides | 90 | 95 |
| Avena fatua | 90 | 95 |
| Lolium multiflorum | 90 | 98 |

**Patentansprüche**

1. Cyclohexan-1,3-dion-Derivate der Formel I

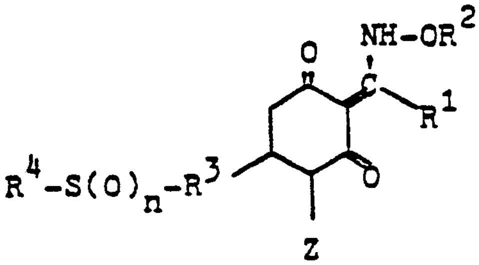

I

und Salze dieser Verbindungan, wobei jeweils bedeuten:

$R^1$ Alkyl mit 2 bis 4 Kohlenstoffatomen;

$R^2$ Alkyl, Alkenyl oder Alkinyl mit 2 bis 5 Kohlenstoffatomen, wobei das Alkenyl halogensubstituiert sein kann;

$R^3$ gesättigte oder ungesättigte Alkylenkette mit 1 bis 4 Kohlenstoffatomen, gegebenenfalls substituiert mit 1 bis 3 Alkyl- oder Alkenylresten mit insgesamt 1 bis 8 Kohlenstoffatomen, mit einem Arylrest mit 6 bis 10 Kohlenstoffatomen oder einem Benzylrest;

$R^4$ Alkyl mit 1 bis 6 C-Atomen, falls $R^3$ ungesättigt ist oder olefinisch oder aromatisch substituiert ist; Alkanyl, gegebenenfalls halogensubstituiert, oder Alkinyl, jeweils mit 2 bis 6 Kohlenstoffatomen; Naphthyl, Arylalkyl oder Arylalkenyl mit jeweils 6 bis 10 Kohlenstoffatomen im Arylrest, der durch Alkyl oder Alkoxy mit jeweils 1 bis 3 Kohlenstoffatomen oder durch Halogen substituiert sein kann, und 2 bis 3 Kohlenstoffatomen im Alkyl- bzw. Alkenylrest, von denen mindestens zwei zwischen dem Arylrest und dem Schwefel stehen;

Z H oder Methoxycarbonyl;

n 0, 1, 2.

2. Cyclohexan-1,3-dion-Derivate nach Anspruch 1, wobei jeweils bedeuten:

$R^1$ Alkyl mit 2 bis 3 Kohlenstoffatomen;

$R^2$ Alkyl oder Alkenyl mit 2 bis 3 Kohlenstoffatomen;

$R^3$ Ethyliden oder Propenyliden, gegebenenfalls substituiert mit 1 bis 2 Substituenten aus der Gruppe Methyl, Phenyl, Benzyl oder einem Alkenyl mit 2 bis 6 Kohlenstoffatomen, wobei die Substituenten insgesamt maximal 7 Kohlenstoffatome enthalten;

$R^4$ Ethyl, Propenyl, Phenyl, Chlorphenyl, Naphthyl, Phenylathyl.

3. Verfahren zur Herstellung einer Verbindung gemäß Anspruch 1, dadurch gekennzeichnet, daß man eine Verbindung der Formel II

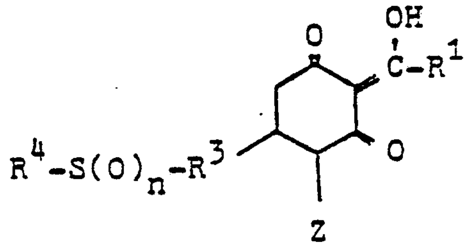

II

mit einer Hydroxylammoniumverbindung der Formel

$R^2ON^{\oplus}H_3$ $A^{\ominus}$

wobei $R^2$ die in Anspruch 1 angegabene Bedeutung hat und $A^{\ominus}$ das zugehörige Anion darstellt, oder einem entsprechenden freien Hydroxylamin in Gegenwart von 0,5 bis 2 Mol, bezogen auf Hydroxylamin- bzw. Hydroxylammoniumverbindung, einer Base und eines inertan Lösungsmittels, bei 0 bis 80° C und pH 2 bis 8 umsetzt.

4. Herbizid, als Wirkstoff enthaltend ein Cyclohexan-1,3-dion-Derivat nach Anspruch 1.

5. Verfahren zur Bekämpfung unerwünschten Pflanzenwuchses durch Behandlung mit Verbindungen nach Anspruch 1.

**Claims**

1. A cyclohexane-1,3-dione derivative of the formula I

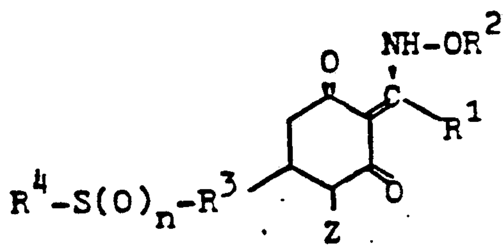

I,

where

$R^1$ is alkyl of from 2 to 4 carbon atoms,

$R^2$ is alkyl, unsubstituted or halogen-substituted alkenyl, or alkynyl, each of from 2 to 5 carbon atoms,

$R^3$ is a saturated or unsaturated alkylene chain of 1 to 4 carbon atoms which is unsubstituted or substituted by 1 to 3 alkyl or alkenyl radicals having a total of 1 to 8 carbon atoms, by aryl of from 6 to 10 carbon atoms, or by benzyl,

$R^4$ is, when $R^3$ is unsaturated or olefinically or aromatically substituted, alkyl of from 1 to 6 carbon atoms. $R^4$ is further unsubstituted or halogen-substituted alkenyl of from 2 to 6 carbon atoms, alkynyl of from 2 to 6 carbon atoms, naphthyl, arylalkyl or arylalkenyl, where aryl is of from 6 to 10 carbon atoms and is unsubstituted or substituted by alkyl or alkoxy, each of from 1 to 3-carbon atoms, or by halogen, and where alkyl or alkenyl is of 2 or 3 carbon atoms, at least two of which being between aryl and sulfur,

Z is H or methoxycarbonyl, and

n is 0,1 or 2

or a salt thereof.

2. A cyclohexane-1,3-dione derivative as claimed in claim 1,

where

$R^1$ is alkyl of 2 or 3 carbon atoms,

$R^2$ is alkyl or alkenyl of 2 or 3 carbon atoms,

$R^3$ is ethylidene or propenylidene which is unsubstituted or substituted by 1 or 2 substituents selected from the group consisting of methyl, phenyl, benzyl and $C_2$-$C_6$-alkenyl, the substituents having a total of not more than 7 carbon atoms, and

$R^4$ is ethyl, propenyl, phenyl, chlorophenyl, naphthyl or phenylethyl.

3. A process for the manufacture of a compound as claimed in claim 1, wherein a compound of the formula II

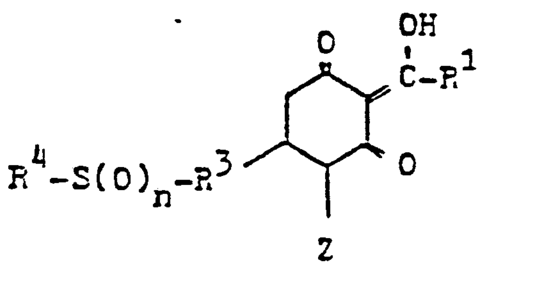

II

is reacted, at from 0 to 80°C and a pH of from 2 to 8, with a hydroxylammonium compound of the formula

$R^2ON^{\oplus}H_3A^{\ominus}$

where $R^2$ has the meanings given in claim 1 and $A^{\ominus}$ is the anion, or with a corresponding free hydroxylamine, in the presence of from 0.5 to 2 moles, based on hydroxylamine or hydroxylammonium compound, of a base and in an inert solvent.

4. A herbicide containing, as active ingredient, a cyclohexane1,3-dione derivative as.claimed in claim 1.

5. A process for combating the growth of unwanted plants by treating them with a compound as claimed in claim 1.

**Revendications**

1.- Derives de cyclohexane 1,3-dione de formule I

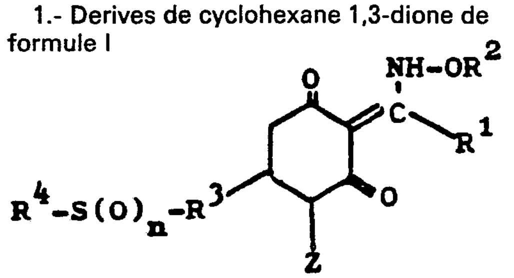

I

et sels de ces composés

$R^1$ représentant alkyle ayant 2 à 4 atomes de carbone;

$R^2$ alkyle, alcényle ou alcinyle ayant 2 à 5 atomes de carbone, l'alcényle pouvant être substitue par halogène;

$R^3$ étant une chaîne alkylène saturée ou insaturée ayant 1 à 4 atomes de carbone, éventuellement substituée avec 1 à 3 restes alkyle ou alcényle ayant au total 1 à 8 atomes de carbone, avec un reste aryle ayant 6 à 10 atomes de carbone ou un reste benzyle;

$R^4$ représentant alkyle ayant i à 6 atomes C, dans le cas où $R^3$ est insaturé ou substitué oléfiniquement ou aromatiquement; alcényle, éventuellement substitué par halogène, ou alcinyle, chacun ayant 2 à 6 atomes de carbone; naphtyle, arylalkyle ou arylalcényle ayant chacun 6 à 10 atomes de carbone dans le reste aryle, qui peut être substitué par alkyle ou alcoxy ayant chacun 1 à 3 atomes de carbone, ou par halogène, et 2 à 3 atomes de carbone dans le reste alkyle ou alcényle, dont au moins deux entre le reste aryle et le soufre;

Z représentant H ou méthoxycarbonyle;

n 0,1 ou 2.

2.- Dérivés de cyclohexane-1,3-dione, selon la revendication 1,

$R^1$ représentant alkyle ayant 2 à 3 atomes de carbone,

$R^2$ alkyle ou alcényle ayant 2 à 3 atomes de carbone;

$R^3$ éthylène ou propénylidène, éventuellement substitué avec 1 à 2 substituants du groupe méthyle, phényle, benzyle ou un alcényle ayant 2 à 6 atomes de carbone, les substituants contenant au total 7 atomes de carbone au maximum;

$R^4$ représentant éthyle, propényle, phényle, chlorophényle, naphtyle, phényléthyle.

3.- Procédé de préparation d'un composé selon la revendication 1, caractérisé par le fait que l'on fait réagir un composé de formule II

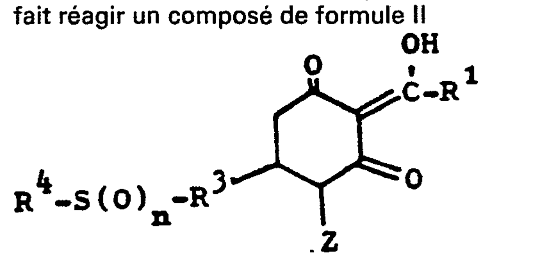

II

avec un composé hydroxylammonium de formule $R^2ON^{\oplus}H_3A^{\ominus}$

$R^2$ ayant la signification donnée dans la revendication 1 et A⊖ représentant l'anion associé libre, correspondante, en présence de 0,5 à 2 moles, rapportée au composé hydroxylamine ou hydroxylammonium, d'une base et d'un solvant inerte, à une température de 0 à 80°C et un pH de 2 à 8.

4.- Herbicide contenant, comme principe actif, un dérivé de cyclohexane-1,3-dione selon la revendication 1.

5.- Procedé pour lutter contre la croissance indésirable de plantes, par traitement avec des composés selon la revendication 1.